# FASCICULE DE BREVET EUROPEEN

(11) **EP 1 220 760 B1**
(45) Date de publication et mention de la délivrance du brevet: **01.12.2004**
(21) Numéro de dépôt: 00962435.4
(22) Date de dépôt: 04.09.2000
(51) Int. Cl.: B60K 15/03, B60K 15/035, F16K 24/04

(54) **SYSTEME ET PROCEDE D'OBTURATION D'UNE OUVERTURE D'UN RESERVOIR**
VERSCHLUSSVORRICHTUNG UND VERFAHREN ZUM VERSCHLIESSEN DER ÖFFNUNG EINES BEHÄLTERS
SYSTEM AND METHOD FOR CLOSING A TANK OPENING

(30) Priorité: 22.09.1999 BE 9900632
(43) Date de publication de la demande: 10.07.2002
(73) Titulaire: Inergy Automotive Systems Research (SA), 1120 Bruxelles (BE)
(72) Inventeur: VAN SCHAFTINGEN, Jules-Joseph, B-1300 Wavre (BE); LEONARD, Stéphane, B-1070 Bruxelles (BE); GERARD, Yannick, B-1950 Kraainem (BE); DOUGNIER, François, B-3190 Boortmeerbeek (BE); OP DE BEEK, Joel, B-2570 Duffel (BE); WOUTERS, Paul, B-1800 Vilvoorde (BE)
(74) Mandataire: Decamps, Alain René François
(86) Numéro de dépôt international: PCT/EP2000/008613
(87) Numéro de publication internationale: WO 2001/021428

(56) Documents cités:
- EP-A- 0 941 884
- US-A- 5 139 043
- US-A- 5 425 470
- PATENT ABSTRACTS OF JAPAN vol. 017, no. 483 (M-1472), 2 septembre 1993 (1993-09-02) & JP 05 116548 A (HONDA MOTOR CO LTD), 14 mai 1993 (1993-05-14)

## Description

La présente invention concerne un système d'obturation d'une ouverture d'un réservoir.

Les réservoirs à liquides et à gaz en usage dans l'industrie ou embarqués dans les véhicules de nature diverse doivent généralement satisfaire à des normes d'étanchéité et de perméabilité en rapport avec le type d'usage pour lequel ils sont conçus et les exigences en matière d'environnement qu'ils doivent respecter. On assiste actuellement, tant en Europe que dans le monde à un renforcement considérable des exigences concernant la limitation des émissions de polluants dans l'atmosphère et la nature en général. La conception de réservoirs à liquides et à gaz évolue en conséquence rapidement vers des techniques capables de mieux garantir l'étanchéité et la sécurité sous des conditions variées d'utilisation. Par ailleurs, on s'est aussi efforcé de réduire au maximum les pertes ayant pour origine les canalisations et accessoires divers liés aux réservoirs. Un moyen parfois utilisé a été d'incorporer certains accessoires et canalisations à l'intérieur des réservoirs, éliminant ainsi leur interface avec l'atmosphère extérieure.

D'autre part, on a fait usage de réservoirs à structures multicouches incluant une ou plusieurs couches en matériau imperméable. L'incorporation d'accessoires dans de tels réservoirs pose le problème de l'obturation étanche et imperméable de l'ouverture pratiquée dans ces réservoirs, afin de pouvoir y insérer les accessoires. Par ailleurs, les émissions provenant des accessoires prennent une importance relative beaucoup plus grande s'agissant de réservoirs multicouches dont la perméabilité propre est sensiblement plus faible que les réservoirs classiques.

Il est connu par le brevet US-A-5,139,043 de recouvrir un clapet de sécurité en cas de retournement d'un réservoir à carburant en matière plastique qui traverse en partie une ouverture pratiquée dans la paroi du réservoir par un dispositif qui fait office de couche de recouvrement de la portion du clapet qui dépasse de l'ouverture et qui permet le soudage étanche du clapet sur la paroi du réservoir.

Dans ce brevet, il n'est pas fait mention du problème particulier des réservoirs de structure multicouche, et le recouvrement du clapet est monocouche. De plus, le clapet n'est pas situé complètement dans le réservoir.

Dans le brevet US-5,425,470, il est divulgué un système d'obturation en accord avec le préambule des revendications 1 et 10 comprenant un bouchon de structure multicouche dont la couche barrière intérieure est mise en continuité de celle de la paroi du réservoir lors de l'opération de soudage. Dans ce brevet, le bouchon ne sert pas de support à un accessoire et n'est pas non plus traversé par une pipette.

La présente invention a pour but de fournir un système d'obturation d'un réservoir plus simple qui soit adapté aux réservoirs de structure multicouche et limite de manière considérable les pertes de liquide et de gaz par rapport aux systèmes d'obturation classiques.

A cet effet l'invention concerne un système d'obturation d'une ouverture d'un réservoir en matière plastique de structure multicouche, constitué d'une plaque en matière plastique soudée sur la paroi du réservoir à l'endroit du pourtour de l'ouverture, selon lequel la plaque est elle-même constituée d'une structure multicouche dont la couche externe soudée sur le réservoir a une composition compatible avec celle de la couche constituant la paroi externe du réservoir. Par couche externe, on entend désigner une couche dont une des faces est adjacente à une autre couche de la structure et dont l'autre face est en contact avec l'environnement extérieur à cette structure.

Par réservoir, on entend une enceinte fermée, de formes diverses, généralement étanche vis-à-vis de l'extérieur, qui peut être équipée de divers accessoires internes ou traversant la paroi de l'enceinte. Le réservoir peut être un réservoir à gaz, un réservoir à liquide ou un réservoir destiné à contenir à la fois un gaz et un liquide. De préférence, il est un réservoir à liquide ou un réservoir à liquide contenant aussi une phase gazeuse.

Certains réservoirs présentent une ou plusieurs ouvertures, c'est-à-dire une découpe de forme circulaire ou non, pratiquée à travers la paroi du réservoir pour des motifs divers, par exemple, afin de pouvoir introduire dans le réservoir un ou plusieurs accessoires qu'il n'est pas possible d'y incorporer lors de sa fabrication.

Avant de pouvoir utiliser le réservoir pour son usage habituel d'entreposage et de confinement de liquide et de gaz, il est donc nécessaire de concevoir et d'adapter un système d'obturation capable de fermer le plus hermétiquement possible le réservoir, après l'introduction de l'accessoire

Selon l'invention, le système d'obturation est conçu pour des réservoirs en matière plastique de structure multicouche. Par matière plastique, on entend toute matière polymérique de synthèse, thermoplastique ou thermodurcissable se présentant à l'état solide dans les conditions ambiantes, ainsi que les mélanges d'au moins deux de ces matières. Les polymères visés comprennent aussi bien les homopolymères que les copolymères (binaires ou ternaires notamment). Des exemples de tels copolymères sont, de manière non limitative : les copolymères à distribution aléatoire (copolymères "statistiques"), les copolymères séquencés, les copolymères à blocs et les copolymères greffés. Les polymères thermoplastiques, y compris les élastomères thermoplastiques sont préférés.

Les réservoirs en matière plastique selon l'invention se présentent sous la forme de réservoirs de structure multicouche. Les réservoirs comprenant au moins une couche de polyéthylène haute densité sont particulièrement préférés. Des réservoirs particulièrement préférés sont ceux dont la structure comprend en outre au moins une couche interne en matériau barrière, c'est-à-dire un matériau, généralement de nature polymérique qui possède une très grande imperméabilité à certains liquides et gaz.

On peut, par exemple, faire usage de compositions barrière connues, telles que celles utilisées pour imperméabiliser les réservoirs à carburant. Des exemples de telles compositions barrière sont, de manière non limitative : les résines à base de polyamides ou copolyamides, les copolymères statistiques d'éthylène et d'alcool vinylique, ou encore les polymères à cristaux liquides thermotropiques tels que les copolyesters de l'acide p-hydroxybenzoïque et, soit de l'acide 6-hydroxy-2-naphtoïque, soit de l'acide téréphtalique et du 4,4'-biphénol (par exemple les copolyesters commercialisés sous les marques VECTRA® et XYDAR®).

Par le vocable "plaque", on entend désigner tout élément plein d'épaisseur faible par rapport à sa surface et dont la rigidité est voisine de celle des parois du réservoir. Selon l'invention, la matière constituant la plaque comprend une matière plastique. De préférence la plaque faisant partie du système d'obturation conforme à l'invention est réalisée exclusivement en matière plastique. La plaque peut présenter des formes diverses; le plus souvent, la forme de la plaque dépend des divers types de réservoir et de l'emplacement de l'ouverture à obturer sur la surface de ces réservoirs. La plaque présente souvent une surface plane ou légèrement incurvée, en particulier dans le cas d'une ouverture de petites dimensions telles que, par exemple, les ouvertures circulaires de diamètre n'excédant pas 80 mm.

La plaque est selon l'invention, soudée sur la paroi du réservoir à l'endroit du pourtour de l'ouverture. On entend par là que la plaque est solidarisée avec cette paroi par mise en contact et interpénétration partielle des molécules d'une portion de la surface d'une des deux faces principales de la plaque jouxtant les extrémités de celle-ci et formant une surface de jonction en forme d'anneau fermé, circulaire ou de forme quelconque et épousant plus ou moins fidèlement le périmètre extérieur de cette face de la plaque avec les molécules d'une surface similaire du réservoir, située en bordure de l'ouverture, sur la totalité de son pourtour.

Selon l'invention, la plaque est elle-même constituée d'une structure multicouche dont la couche externe soudée sur le réservoir a une composition compatible avec celle de la couche constituant la paroi externe du réservoir.

Par compatibilité, on entend ici une compatibilité chimique et physique des constituants des compositions respectives de la couche de la plaque soudée sur le réservoir et de la paroi externe de celui-ci au voisinage de l'ouverture. Une bonne compatibilité évite les phénomènes de ségrégation de certains des constituants des compositions respectives des parties soudées, de même que toute réaction chimique et phénomène physique préjudiciables aux propriétés du réservoir dont l'ouverture est ainsi obturée. Une bonne compatibilité garantit en général l'adhésion à long terme de la plaque sur le réservoir.

Un système particulier préféré conforme à l'invention est celui où le réservoir et la plaque comprennent des moyens d'imperméabilisation aux liquides et aux gaz. Les moyens d'imperméabilisation de la plaque et du réservoir peuvent être identiques ou différents. On préfère généralement que ces moyens soient identiques, en particulier qu'ils comprennent des compositions barrière identiques.

On peut incorporer ces compositions barrière à l'une des couches de la plaque ou insérer à l'intérieur de la structure une couche supplémentaire particulière constituée essentiellement de composition barrière. De préférence, on insère à l'intérieur de la structure une couche supplémentaire constituée essentiellement d'une composition barrière.

La structure multicouche de la plaque peut être différente de celle des parois du réservoir lui-même. Elle peut aussi être identique à celle-ci. On préfère souvent les systèmes d'obturation dans lesquels la structure de la plaque est identique à celle des parois du réservoir. Tout particulièrement préférés sont les systèmes dans lesquels, au sein de structures identiques, les compositions barrière sont elles-mêmes identiques et constituent des couches polymériques identiques.

En variante, la structure multicouche de la plaque peut aussi comprendre deux couches barrière distinctes. Un exemple préféré selon cette variante est celui des plaques comportant deux structures complètes identiques à celle des parois du réservoir, empilées l'une sur l'autre et résultant de la compression de deux structures identiques aux parois du réservoir.
Une autre variante consiste à réaliser au voisinage du bord de la plaque un bossage dans lequel les épaisseurs des couches sont réduites, en particulier celles des couches autres que la couche barrière. L'intérêt est ici de limiter encore le risque de perte par émission à l'endroit de la soudure de la plaque sur le réservoir.

Le système selon l'invention convient bien pour obturer une simple ouverture d'un réservoir. Il convient aussi pour obturer une ouverture surmontant un accessoire situé dans le réservoir.

Selon une forme particulière du système d'obturation selon l'invention qui est préférée, la plaque est solidaire d'au moins un accessoire situé du côté intérieur au réservoir. Par accessoire, on entend désigner tout organe en général par lequel transite du liquide ou du gaz, ou est en contact avec du liquide ou du gaz et qui remplit une fonction particulière propre au dispositif dont fait partie le réservoir, en ce compris une fonction de transport de liquide et/ou de gaz entre deux autres organes.

Des exemples de tels accessoires comprennent, non limitativement, les accessoires suivants :
- un récipient contenant une composition chimique ou physique quelconque, notamment un canister d'absorption de vapeurs;
- une jauge à liquide ou a gaz;
- une connexion électrique aboutissant à une jauge à liquide ou à gaz;
- une pompe à liquide ou à gaz;
- un clapet de sécurité assurant la fermeture contrôlée du réservoir dans certaines situations particulières;
- une capacité vidangeable pour recueillir du liquide;
- une connexion électrique d'alimentation du moteur d'une pompe à liquide ou à gaz;
- une canalisation de liquide aboutissant à un dispositif d'alimentation d'un dispositif quelconque, notamment à un moteur;
- un dispositif de séparation liquide-vapeur.

Une combinaison quelconque d'au moins deux accessoires peut être utilisée, éventuellement en présence de plusieurs exemplaires d'un même accessoire.

Selon cette forme de réalisation, l'accessoire est solidaire de la plaque, c'est-à-dire qu'il est lié à la plaque par un moyen mécanique. L'accessoire est fixé à la plaque par tout moyen mécanique compatible avec le type de réservoir, la nature du liquide et du gaz qui y est entreposé et l'usage habituel qui est fait du réservoir. La plaque peut fournir un moyen de préhension et de transport de l'accessoire. On peut par exemple utiliser une plaque sur laquelle on a fixé l'accessoire par un dispositif mécanique de fixation. De tels dispositifs sont, par exemple des vis, écrous, système d'enclipsage, .... On peut aussi utiliser une plaque et un accessoire qui ont été solidarisés dès leur fabrication, par exemple par moulage. On peut encore faire usage d'un moyen de solidarisation à caractère plus permanent tel que le collage ou le soudage. On préfère généralement les accessoires solidarisés à la plaque par soudage.

L'accessoire solidaire de la plaque se présente par rapport à celle-ci sur la face de plaque qui est à l'intérieur du réservoir, lorsque l'obturation est réalisée.

Des accessoires de type divers appartiennent à cette forme de réalisation. Comme exemples, on peut citer des clapets ROV ("Roll-Over-Valve") ou clapets de fermeture automatique en cas de retournement du réservoir, des clapets ORVR ("On board Refuelling Vapour Recovery") ou dispositif de récupération des vapeurs lors du remplissage du réservoir, des dispositifs OBD ("On Board Diagnostic") ou dispositifs de diagnostic embarqués, des séparateurs liquide-vapeur.

Certains de ces accessoires peuvent comporter au moins un conduit traversant la plaque par un orifice percé dans celle-ci. Il est dans ce cas souvent avantageux de munir l'orifice de sortie du conduit d'un joint d'étanchéité.

La plaque peut aussi avoir été mise en forme pour être adaptée au mieux à l'environnement de l'ouverture à obturer ainsi qu'à la forme et à l'encombrement de l'accessoire dont elle est solidaire.

Une plaque solidaire d'un séparateur liquide-vapeur comprenant un conduit d'évacuation des vapeurs qui traverse la plaque par un orifice a donné de bons résultats.

Un système d'obturation particulier consiste à utiliser un réservoir dont la paroi porte des ergots de fixation au voisinage de l'ouverture. Ceux-ci permettent de soutenir la paroi lors de l'opération de soudage, en cas de déformation flexible de cette paroi.

L'invention concerne aussi un procédé pour obturer un réservoir en matière plastique de structure multicouche qui permet de limiter fortement les pertes de liquide et de gaz dans l'environnement. Elle permet, en option, l'intégration d'au moins un accessoire à l'intérieur du réservoir.

A cet effet, l'invention concerne un procédé d'obturation d'une ouverture d'un réservoir en matière plastique de structure multicouche par une plaque en matière plastique selon lequel on soude la plaque sur la couche externe du réservoir à l'endroit du pourtour de l'ouverture qui se caractérise en ce que l'on soude une plaque de structure multicouche dont la couche soudée au réservoir a une composition compatible avec la composition de la couche externe du réservoir.

Dans ce procédé, les termes réservoir, ouverture, obturation, matière plastique, structure multicouche, plaque, souder, endroit du pourtour de l'ouverture, composition compatible ont exactement les mêmes significations que celles explicitées *supra* pour le système d'obturation.

La plaque utilisée dans ce procédé peut être d'origine diverse. Elle peut, par exemple avoir été fabriquée indépendamment du réservoir lui-même, à un moment différent ou non, au moyen d'un procédé propre qui n'est pas nécessairement identique à celui mis en oeuvre pour fabriquer le réservoir. Par exemple, la plaque peut être obtenue par coextrusion suivie de moulage par compression. Elle peut aussi avoir été obtenue par moulage selon une des nombreuses techniques connues. De telles techniques sont, par exemple, le moulage par soufflage, par compression et par injection et le thermoformage.

Lorsque la plaque est fabriquée indépendamment du réservoir, on procède à la réalisation d'une ouverture dans le réservoir qui soit légèrement plus petite en dimensions que celles de la plaque, puis on procède à l'obturation de l'ouverture par soudage de la plaque.

En variante, la plaque peut avoir été fabriquée simultanément au réservoir et découpée dans la matière plastique de structure multicouche utilisée pour fabriquer le réservoir. Cette façon de procéder est particulièrement avantageuse du point de vue de la synchronisation de la production de réservoirs équipés de leurs accessoires. Il est par exemple possible de découper la plaque directement dans une région de la paroi du réservoir, après réalisation de celui-ci ou d'une partie de celui-ci. Cette variante suppose aussi que la couche externe la plus intérieure de la structure multicouche du réservoir soit compatible avec sa couche la plus extérieure.

Une autre variante est de découper la plaque dans les rebuts de fabrication du réservoir, pour autant qu'ils possèdent la structure multicouche adéquate.

On peut encore découper la plaque dans une annexe au réservoir spécialement conçue à cette fin et produite simultanément à celui-ci.

Enfin, on peut également fabriquer des plaques comportant deux structures complètes identiques à celle des parois du réservoir, par compression de deux structures identiques aux parois du réservoir. Dans ce cas, on peut, par exemple, comprimer une partie particulière de la paraison servant à produire le réservoir. Il est tout particulièrement avantageux pour ce faire, d'effectuer la compression des deux structures identiques de la plaque à même le moule de production du réservoir.

L'opération de soudage de la plaque sur le réservoir peut se faire par toute technique généralement connue par elle-même. On peut, par exemple utiliser la technique de soudage au miroir ou encore la technique de soudage au laser. La technique de soudage au miroir est préférée.

Selon une forme particulière du procédé conforme à l'invention, on solidarise au moins un accessoire à la plaque, du côté intérieur au réservoir. Tout procédé de solidarisation compatible avec le réservoir, la nature du liquide et du gaz qu'il contient ainsi qu'avec ses conditions d'utilisation peut généralement convenir.

On préfère cependant utiliser un procédé de soudage pour réaliser cette solidarisation.

Ici encore, les termes solidarisation et côté intérieur au réservoir ont la même signification que déjà explicité supra dans le cas du système d'obturation.

Selon cette forme de réalisation particulière du procédé conforme à l'invention, une première variante consiste à souder au moins un accessoire à la plaque avant de procéder à l'obturation de l'ouverture du réservoir par soudage de la plaque solidaire de l'accessoire sur le pourtour de cette ouverture.

De cette manière, la plaque joue le rôle de support de l'accessoire et permet son introduction de manière aisée à l'intérieur du réservoir.

Une deuxième variante consiste au contraire à solidariser, dans une première étape, au moins un accessoire sur la paroi interne du réservoir adjacente à l'ouverture et, dans une deuxième étape subséquente, d'obturer le réservoir par soudage simultané de la plaque sur l'accessoire et sur le pourtour de l'ouverture.

Dans l'une ou l'autre des formes de réalisation du procédé que l'on met en oeuvre, un problème peut se poser lors de l'opération de soudage de la plaque sur la paroi du réservoir lorsque cette dernière, pour une raison quelconque subit une déformation flexible au voisinage de l'ouverture, par exemple sous l'influence de son propre poids ou par suite des forces exercées perpendiculairement à la surface du réservoir lors de la soudure. Pareille situation peut en effet se présenter lorsque le réservoir vient directement de fabrication et que la température de ses parois est encore relativement élevée. Une autre raison pourrait être que le diamètre de l'ouverture est relativement grand et que la matière plastique au voisinage du bord de l'ouverture n'est plus soutenue aussi efficacement que dans le cas de petites ouvertures.

L'invention concerne aussi un procédé d'obturation qui remédie à ces problèmes de déformation flexible de la paroi du réservoir en supportant la paroi du réservoir dans le voisinage de l'ouverture durant l'opération de soudage de la plaque au moyen d'ergots moulés sur cette paroi

Les ergots ont été moulés sur la paroi externe du réservoir au voisinage du pourtour de l'ouverture. La paroi du réservoir est soutenue à cet endroit au moyen de pinces qui viennent enserrer les ergots.

Des ergots semblables à ceux décrits ci-dessus peuvent aussi être utilisés lorsqu'on découpe la plaque dans la paroi du réservoir, de façon à éviter les déformations de celle-ci.

Les ergots peuvent encore être utilisés pour corriger, avant l'opération de soudage, un défaut de planéité qui surviendrait à la surface du réservoir.

Enfin, ils peuvent aussi concourir à faire correspondre parfaitement la forme de la surface extérieure du réservoir à celle de la plaque.

L'invention concerne aussi l'utilisation du procédé décrit ci-dessus pour obturer une ouverture d'un réservoir à carburant, en particulier pour véhicule automobile.

Par véhicule automobile, on désigne les véhicules mus par un moteur thermique tels que les camions, voitures et motocyclettes.

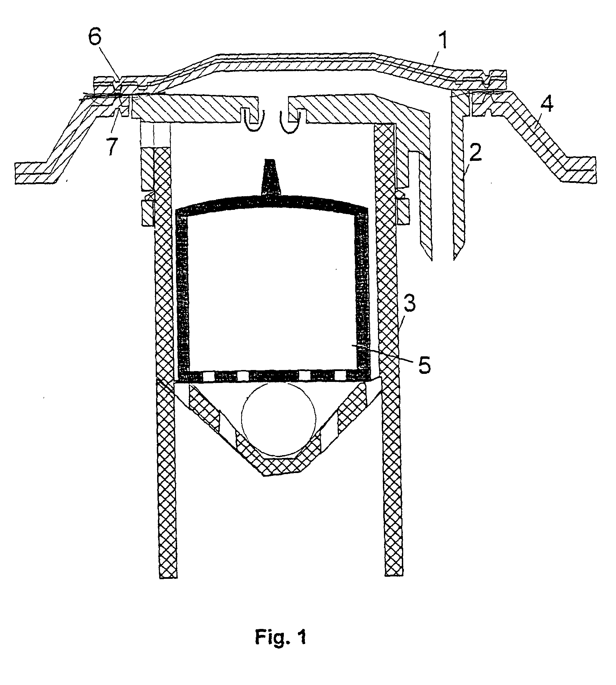

Les figures 1 à 4 qui suivent sont données dans le but d'illustrer l'invention, sans vouloir en restreindre la portée.

La figure 1 représente une vue en coupe d'un réservoir à carburant (4) à 6 couches (PEHD/Rebroyés/PE greffé anhydride maléique/EVOH/PE greffé anhydride maléique/PEHD) présentant une ouverture obturée par une plaque (1) portant deux accessoires. La plaque (1) coextrudée a été moulée par compression à même le moule de soufflage du réservoir par pinçage de deux parois du réservoir et a été soudée par la technique du miroir chauffant sur une pipette (2) en PEHD. La pipette (2) maintient aussi par encliquetage mécanique un clapet ROV (5) muni d'une jupe (3) en polyacétal. L'embout de la pipette (2) a été raccordé à une ligne de ventilation interne au réservoir (4), non montrée sur la figure.

On a ensuite soudé la plaque (1) à l'aide d'un miroir chauffant sur la paroi externe du réservoir (4).

Avantageusement, aucune éjection de liquide n'a pu se produire du réservoir (4) en direction de l'intérieur de la pipette (2) en raison de l'étanchéité de la liaison entre la pipette (2) et la plaque (1).

La plaque coextrudée (1) et le réservoir (4) ont comporté tous deux des bossages (6) et (7) qui ont assuré un rapprochement des couches barrière internes aux structures multicouches de la plaque (1) et du réservoir (4) au droit des trottoirs de soudure. Il en a résulté avantageusement une réduction importante des émissions.

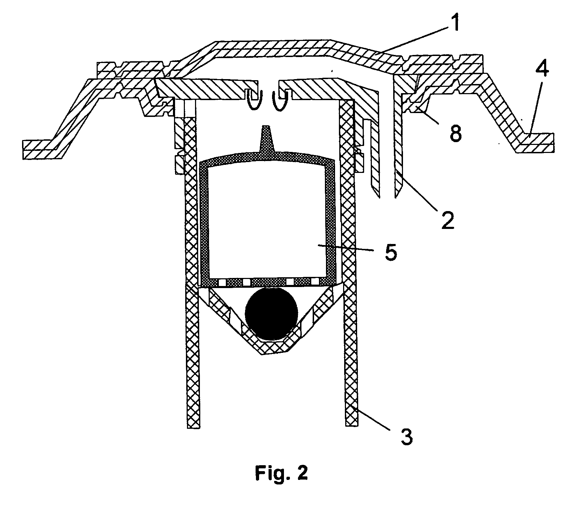

La figure 2 illustre un système analogue à celui de la figure 1 dans lequel une pipette (2), un clapet ROV (5) et la paroi d'un réservoir (4) ont été soudés simultanément à une plaque coextrudée (1) moulée par compression. Cette plaque (1) a été obtenue par soufflage au préalable dans une cavité annexe à celle servant au soufflage du réservoir. Dans cette variante, le clapet (5) a toujours été fixé à la pipette (2) par encliquetage, mais l'ensemble pipette-clapet a été déposé sur un rebord (8) découpé dans un bossage de la paroi du réservoir (4) sur le pourtour d'une ouverture.

On a ensuite procédé au soudage au miroir de la plaque (1) en une seule opération sur la pipette (2) et sur le réservoir (4).

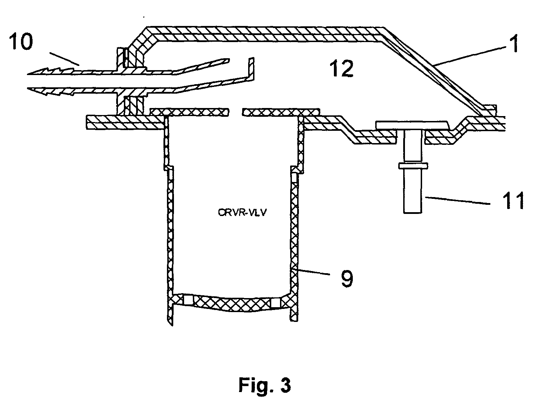

La figure 3 illustre une plaque coextrudée (1) obturant une ouverture d'un réservoir et portant un séparateur liquide-vapeur. La plaque (1) a été moulée, comme dans le cas décrit à la figure 2, par soufflage d'une paraison dans une cavité auxiliaire à celle servant au soufflage du réservoir. La plaque (1) a été équipée et traversée par une pipette de dégazage (10) qui a présenté un orifice interne surélevé fixé à la plaque et muni d'un joint à l'endroit de la traversée de la plaque (1). Cette pipette a été réalisée en matériau à faible perméabilité.

Un clapet (9) de type ORVR a été soudé sur la paroi du réservoir le long du pourtour de l'ouverture et a communiqué directement avec le volume interne de celui-ci.

Une pipette (11) a aussi été soudée sur le réservoir et a été connectée à l'intérieur de celui-ci à un clapet (non illustré sur la figure) situé dans une autre zone du réservoir.

Un espace (12) délimité par la paroi du réservoir, le clapet ORVR, la pipette, la plaque coextrudée (1) a constitué un dispositif séparateur liquide-vapeur.

Ce dispositif a présenté les avantages suivants, comparés à des dispositifs classiques :
- Intégration de la fonction séparation liquide-vapeur dans le réservoir;
- Facilité de fixation et recours possible à différentes techniques pour la fixation de la pipette externe (10) en raison de l'accessibilité des faces intérieure et extérieure de la plaque avant soudage;
- Utilisation d'un clapet ORVR (9) et d'une pipette (11) en polyéthylène HD aisément soudable sur la paroi externe du réservoir, sans nuire à son imperméabilité;
- Simplifications de la réalisation du clapet (9) et de la pipette (11);
- Recouvrement des zones des parois du réservoir qui présentent des épaisseurs faibles après fabrication par soufflage, telles que les zones proches du clapet (9) et de la pipette (11).

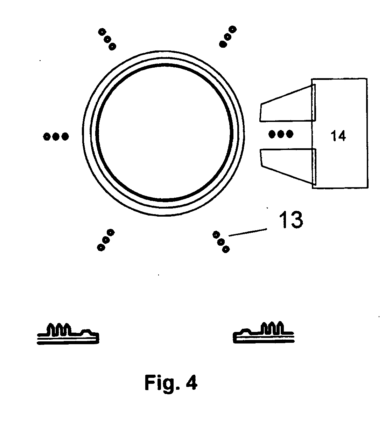

La figure 4 illustre un système de retenue des zones à déformation flexible du réservoir au voisinage de l'ouverture sur la paroi du réservoir selon des positions diamétrales proches de l'ouverture. Des ergots (13) en PEHD, groupés par 3 et disposés en ligne, ont été moulés lors du soufflage du réservoir en périphérie de la zone de découpe de l'ouverture.

Des pinces (14) ont alors été amenées en position ouverte au-dessus de la paroi du réservoir de manière à entourer chaque groupe de 3 ergots (13). Après blocage de leur position dans le sens perpendiculaire à la paroi du réservoir, elles ont été refermées et serrées sur les ergots, de manière à soutenir la paroi du réservoir pendant toute la durée des opérations de perçage de l'ouverture, d'usinage éventuel de ses bords, d'introduction éventuelle d'accessoires et de soudage de la plaque pour obturer le réservoir.

## Revendications

1. Système d'obturation d'une ouverture d'un réservoir (4) en matière plastique de structure multicouche comprenant au moins une couche de polyéthylène haute densité et au moins une couche interne en matériau barrière, constitué d'une plaque (1) en matière plastique s'appuyant à sa périphérie sur la couche externe du réservoir (4) située sur le pourtour de l'ouverture, cette plaque (1) comprenant aussi au moins une couche de polyéthylène haute densité et au moins une couche interne en matériau barrière soudée sur la paroi du réservoir (4) à l'endroit du pourtour de l'ouverture et étant elle-même constituée d'une structure multicouche dont la couche externe soudée sur le réservoir (4) a une composition compatible avec celle de la couche constituant la paroi externe du réservoir (4),
**caractérisé en outre en ce que**
à l'endroit où une couche externe de la plaque (1) est soudée sur la couche constituant la paroi externe du réservoir (4), la plaque (1) et la paroi du réservoir (4) sont superposées de manière à ce que le nombre de couches superposées à cet endroit soit égal à la somme du nombre de couches dans la plaque (1) et du nombre de couches dans la paroi du réservoir (4), et de manière à ce que la couche barrière de la plaque (1) ne soit pas en continuité avec la couche barrière de la paroi du réservoir (4).

2. Système selon la revendication précédente, **caractérisé en outre en ce que** la plaque (1) ne traverse pas la paroi du réservoir (4).

3. Système selon la revendication 1 ou 2, **caractérisé en outre en ce que** le réservoir (4) et la plaque (1) comprennent des moyens identiques d'imperméabilisation aux liquides et aux gaz et sont constitués de la même structure multicouche.

4. Système selon une quelconque des revendications précédentes, **caractérisé en outre en ce que** la plaque (1) est équipée et traversée par un conduit (10).

5. Système selon la revendication précédente, **caractérisé en ce que** le conduit (10) est muni d'un joint à la traversée de la plaque (1).

6. Système selon une quelconque des revendications 1 à 5, **caractérisé en outre en ce que** la plaque (1) est solidaire d'au moins un accessoire (2) situé du côté intérieur au réservoir.

7. Système selon la revendication précédente, **caractérisé en outre en ce que** l'accessoire (2) est un séparateur liquide-vapeur comprenant un conduit d'évacuation des vapeurs (10) qui traverse la plaque (1) par un orifice.

8. Système selon l'une quelconque des revendications 1à 7, **caractérisé en outre en ce que** la plaque (1) est constituée d'une structure multicouche comprenant deux structures complètes identiques à celle des parois du réservoir (4), empilées l'une sur l'autre et résultant de la compression de deux structures identiques aux parois du réservoir (4).

9. Système selon l'une quelconque des revendications précédentes, **caractérisé en outre en ce que** la paroi du réservoir (4) porte des ergots de fixation (13) au voisinage de l'ouverture.

10. Procédé d'obturation d'une ouverture d'un réservoir (4) en matière plastique de structure multicouche comprenant au moins une couche de polyéthylène haute densité et au moins une couche interne en matériau barrière, par une plaque (1) en matière plastique s'appuyant à sa périphérie sur la couche externe du réservoir (4) située sur le pourtour de l'ouverture, cette plaque (1) comprenant aussi au moins une couche de polyéthylène haute densité et au moins une couche interne en matériau barrière, selon lequel la plaque (1) est soudée sur la paroi du réservoir (4) à l'endroit du pourtour de l'ouverture, la plaque (1) étant elle-même constituée d'une structure multicouche dont la couche externe soudée sur le réservoir (4) a une composition compatible avec celle de la couche constituant la paroi externe du réservoir (4),
**caractérisé en outre en ce que**
l'on soude la plaque (1) de telle manière qu'à l'endroit où une couche externe de celle-ci est soudée sur la couche constituant la paroi externe du réservoir (4), la plaque (1) et la paroi du réservoir (4) sont superposées de manière à ce que le nombre de couches superposées à cet endroit soit égal à la somme du nombre de couches dans la plaque (1) et le nombre de couches dans la paroi du réservoir (4), et de manière à ce que la couche barrière de la plaque (1) ne soit pas en continuité avec la couche barrière de la paroi du réservoir (4).

11. Procédé selon la revendication précédente, **caractérisé en outre en ce qu'**on solidarise par soudage au moins un accessoire (2) à la plaque (1), du côté intérieur au réservoir (4).

12. Procédé selon la revendication 11, **caractérisé en outre en ce qu'**on soude au moins un accessoire (2) à la plaque (1) avant de procéder à l'obturation de l'ouverture du réservoir (4) par soudage de la plaque (1) portant l'accessoire (2) sur le pourtour de cette ouverture.

13. Procédé selon la revendication 11, **caractérisé en outre en ce qu'**on solidarise au moins un accessoire (2) sur la paroi interne du réservoir (4) adjacente à l'ouverture avant d'obturer le réservoir (4) par soudage simultané de la plaque (1) sur l'accessoire (2) et sur le pourtour de l'ouverture.

14. Procédé selon l'une quelconque des revendications 10 à 13, **caractérisé en outre en ce qu'**on supporte la paroi du réservoir (4) dans le voisinage de l'ouverture durant l'opération de soudage de la plaque (1) au moyen d'ergots (13) moulés sur cette paroi.

15. Procédé selon l'une quelconque des revendications 10 à 14 **caractérisé en ce que** le réservoir est un réservoir à carburant (4) pour véhicule automobile.

## Patentansprüche

1. System zum Verschließen der Öffnung eines Behälters (4) aus Kunststoff mit mehrlagigem Aufbau, der zumindest eine Polyethylenschicht hoher Dichte und zumindest eine Innenschicht aus einem Trennmaterial aufweist, mit einer Platte (1) aus Kunststoff, die an ihrem Umfang an der Außenschicht des Behälters (4) um den Umfang der Öffnung herum angreift, wobei diese Platte (1), die ebenfalls zumindest eine Schicht aus Polyethylen hoher Dichte und zumindest eine Innenschicht aus einem Trennmaterial aufweist, mit der Wand des Behälters (4) im Bereich des Umfanges der Öffnung verschweißt ist und ihrerseits einen mehrlagigen Aufbau hat, dessen Außenschicht, die mit dem Behälter (4) verschweißt ist, eine Zusammensetzung aufweist, die mit jener der die Außenwand des Behälters (4) bildenden Schicht kompatibel ist,
**dadurch gekennzeichnet, daß**
an der Stelle, an welcher eine Außenschicht der Platte (1) auf die Schicht geschweißt ist, welche die Außenwand des Behälters (4) bildet, die Platte (1) und die Wand des Behälters (4) derart überlagert sind, daß die Anzahl der einander an dieser Stelle überlagernden Schichten gleich der Summe der Anzahl der Schichten in der Platte (1) und der Anzahl der Schichten in der Wand des Behälters (4) ist, und derart, daß die Trennschicht der Platte (1) nicht in Kontinuität mit der Trennschicht der Wand des Behälters (4) ist.

2. System nach dem vorhergehenden Anspruch, **dadurch gekennzeichnet, daß** die Platte (1) die Wand des Behälters (4) nicht durchsetzt.

3. System nach Anspruch 1 oder 2, **dadurch gekennzeichnet, daß** der Behälter (4) und die Platte (1) identische Mittel zum Undurchlässigmachen gegen Flüssigkeiten und Gase aufweisen und aus dem gleichen mehrlagigen Aufbau gebildet sind.

4. System nach einem der vorhergehenden Ansprüche, **dadurch gekennzeichnet, daß** die Platte (1) mit einer Leitung (10) ausgestattet und von dieser durchsetzt ist.

5. System nach dem vorhergehenden Anspruch, **dadurch gekennzeichnet, daß** die Leitung (10) an ihrem Durchgang durch die Platte (1) mit einer Dichtung versehen ist.

6. System nach einem der Ansprüche 1 bis 5, **dadurch gekennzeichnet, daß** die Platte (1) mit zumindest einem Zubehör (2) fest verbunden ist, das auf der Innenseite des Behälters angeordnet ist.

7. System nach dem vorhergehenden Anspruch, **dadurch gekennzeichnet, daß** das Zubehör (2) eine Flüssigkeits-Dampf-Trenneinrichtung ist, die eine Austragleitung für Dämpfe (10) aufweist, welche die Platte (1) durch eine Öffnung durchsetzt.

8. System nach einem der Ansprüche 1 bis 7, **dadurch gekennzeichnet, daß** die Platte (1) einen mehrlagigen Aufbau hat, mit zwei vollständig identischen Strukturen, wie jene der Wände des Behälters (4), wobei die Strukturen übereinandergelegt sind und aus dem Anpressen der beiden identischen Strukturen an die Wände des Behälters (4) gebildet ist.

9. System nach einem der vorhergehenden Ansprüche, **dadurch gekennzeichnet, daß** die Wand des Behälters (4) Befestigungsansätze (13) in der Nähe der Öffnung aufweist.

10. Verfahren zum Verschließen einer Öffnung eines Behälters (4) aus Kunststoff mit mehrlagigem Aufbau mit zumindest einer Polyethylenschicht hoher Dichte und zumindest einer Innenschicht aus einem Trennmaterial, durch eine Platte (1) aus Kunststoff, die an ihrem Umfang an der Außenschicht des Behälters (4) angreift, welche die Öffnung umgibt, wobei die Platte (1) ebenfalls zumindest eine Polyethylenschicht hoher Dichte und zumindest eine Innenschicht aus einem Trennmaterial aufweist, wobei die Platte (1) an die Wand des Behälters (4) im Bereich des Umfanges der Öffnung angeschweißt wird, wobei die Platte (1) ihrerseits einen mehrlagigen Aufbau hat, dessen Außenschicht, die an den Behälter (4) geschweißt ist, eine Zusammensetzung hat, die mit jener der die Außenwand des Behälters (4) bildenden Schicht kompatibel ist,
**dadurch gekennzeichnet, daß**
man die Platte (1) derart anschweißt, daß in dem Bereich, in welchem die Außenschicht der Platte an die Schicht angeschweißt ist, welche die Außenwand des Behälters (4) bildet, die Platte (1) und die Wand des Behälters (4) derart überlagert sind, daß die Anzahl der überlagerten Schichten an dieser Stelle gleich der Summe der Anzahl der Schichten in der Platte (4) und der Anzahl der Schichten in der Wand des Behälters (4) ist, und derart, daß die Trennschicht der Platte (1) nicht in Kontinuität mit der Trennschicht der Wand des Behälters (4) ist.

11. Verfahren nach dem vorhergehenden Anspruch, **dadurch gekennzeichnet, daß** man durch Schweißen zumindest ein Zubehör (2) mit der Platte (1) an der Innenseite des Behälters (4) verbindet.

12. Verfahren nach Anspruch 11, **dadurch gekennzeichnet, daß** man zumindest ein Zubehör (2) an die Platte (1) anschweißt, vor dem Verschließen der Öffnung des Behälters (4) durch Anschweißen der das Zubehör (2) tragenden Platte (1) an den Umfang dieser Öffnung.

13. Verfahren nach Anspruch 11, **dadurch gekennzeichnet, daß** man vor dem Verschließen des Behälters (4) zumindest ein Zubehör (2) an der Innenwand des Behälters (4) nahe der Öffnung durch gleichzeitiges Anschweißen der Platte (1) an das Zubehör (2) und an den Umfang der Öffnung befestigt.

14. Verfahren nach einem der Ansprüche 10 bis 13, **dadurch gekennzeichnet, daß** man die Wand des Behälters (4) in der Nähe der Öffnung während des Anschweißens der Platte (1) mit Hilfe von Ansätzen (13) abstützt, die an dieser Wand angeformt sind.

15. Verfahren nach einem der Ansprüche 10 bis 14, **dadurch gekennzeichnet, daß** der Behälter ein Kraftstoffbehälter (4) für ein Automobilfahrzeug ist.

## Claims

1. System for closing off an opening in a plastic tank (4) of multilayer structure, comprising at least one layer of high-density polyethylene and at least one internal layer made of a barrier material, consisting of a plastic plate (1) pressing via its periphery on the external layer of the tank (4), which is located around the perimeter of the opening, this plate (1) also including at least one layer of high-density polyethylene and at least one internal layer made of a barrier material welded to the wall of the tank (4) in the region of the perimeter of the opening, the plastic plate (1) itself consisting of a multilayer structure, the external layer of which, welded to the tank (4), has a composition compatible with that of the layer constituting the external wall of the tank (4), further **characterized in that**, at the point where an external layer of the plate (1) is welded to the layer constituting the external wall of the tank (4), the plate (1) and the wall of the tank (4) are superposed so that the number of superposed layers at this point is equal to the sum of the number of layers in the plate (1) and of the number of layers in the wall of the tank (4), and in such a way that the barrier layer of the plate (1) is not continuous with the barrier layer of the wall of the tank (4).

2. System according to the preceding claim, further **characterized in that** the plate (1) does not pass through the wall of the tank (4).

3. System according to Claim 1 or 2, further **characterized in that** the tank (4) and the plate (1) include identical means of providing impermeability to liquids and gases and are formed from the same multilayer structure.

4. System according to any one of the preceding claims, further **characterized in that** the plate (1) is equipped with and penetrated by a duct (10).

5. System according to the preceding claim, **characterized in that** the duct (10) is provided with a seal across the plate (1).

6. System according to any one of Claims 1 to 5, further **characterized in that** at least one accessory (2) is fastened to the plate (1) on the inner side of the tank (4).

7. System according to the preceding claim, further **characterized in that** the accessory (2) is a liquid/vapour separator which includes a vapour discharge duct (10) that passes through the plate (1) via an orifice.

8. System according to any one of Claims 1 to 7, further **characterized in that** the plate (1) is formed from a multilayer structure comprising two complete structures that are identical to that of the walls of the tank (4) and are stacked one on top of the other and resulting from the compression of two structures identical to the walls of the tank (4).

9. System according to any one of the preceding claims, further **characterized in that** the wall of the tank (4) bears fastening lugs (13) near the opening.

10. Method of closing off an opening of a plastic tank (4) of multilayer structure, comprising at least one layer of high-density polyethylene and at least one internal layer made of a barrier material, by a plastic plate (1) that presses with its periphery on the external layer of the tank (4), which is located on the perimeter of the opening, this plate (1) also comprising at least one layer of high-density polyethylene and at least one internal layer made of a barrier material, in which method the plate (1) is welded to the wall of the tank (4) in the region of the perimeter of the opening, the plate (1) itself consisting of a multilayer structure, the external layer of which, welded to the tank (4), has a composition compatible with that of the layer constituting the external wall of the tank (4), further **characterized in that** the plate (1) is welded in such a way that, at the point where an external layer of the latter is welded to the layer constituting the external wall of the tank (4), the plate (1) and the wall of the tank (4) are superposed in such a way that the number of superposed layers at that point is equal to the sum of the number of layers in the plate (1) and the number of layers in the wall of the tank (4), and in such a way that the barrier layer of the plate (1) is not continuous with the barrier layer of the wall of the tank (4).

11. Method according to the preceding claim, further **characterized in that** at least one accessory (2), on the inner side of the tank (4), is fastened to the plate (1) by welding.

12. Method according to Claim 11, further **characterized in that** at least one accessory (2) is welded to the plate (1) before the operation of closing off the opening of the tank (4) by welding the plate (1) bearing the accessory (2) to the perimeter of this opening.

13. Method according to Claim 11, further **characterized in that** at least one accessory (2) is fastened to that internal wall of the tank (4) which is adjacent to the opening before the tank (4) is closed off by simultaneously welding the plate (1) to the accessory (2) and to the perimeter of the opening.

14. Method according to any one of Claims 10 to 13, further **characterized in that**, during the operation of welding the plate (1), the wall of the tank (4) in the region of the opening is supported by means of lugs (13) moulded on this wall.

15. Method according to any one of Claims 10 to 14, **characterized in that** the tank is a fuel tank (4) for a motor vehicle.
